# EUROPÄISCHE PATENTSCHRIFT

(11) **EP 2 823 730 B1**
(45) Veröffentlichungstag und Bekanntmachung des Hinweises auf die Patenterteilung: **05.09.2018**
(21) Anmeldenummer: 14002328.4
(22) Anmeldetag: 08.07.2014
(51) Int. Cl.: A46B 9/02, A46B 11/00, A46B 7/02, A46B 13/02, A46B 17/06, A46B 9/10

(54) **Rotierbarer Reinigungskopf für Haare und Fell und Reinigungsvorrichtung**
Rotatable cleaning head for hair and fur and cleaning device
Tête de nettoyage rotative pour poils et fourrure et dispositif de nettoyage

(30) Priorität: 10.07.2013 DE 102013011441
(43) Veröffentlichungstag der Anmeldung: 14.01.2015
(73) Patentinhaber: Krüger, Gerd, 75031 Eppingen (DE); Grittmann, Dennis, 75031 Eppingen (DE); Diefenbacher, Michael, 75056 Sulzfeld (DE)
(72) Erfinder: Krüger, Gerd, 75031 Eppingen (DE); Diefenbacher, Michael, 75056 Sulzfeld (DE); Grittmann, Dennis, 75031 Eppingen (DE)
(74) Vertreter: Drobnik, Stefanie

(56) Entgegenhaltungen:
- DE-U1-202004 009 333
- GB-A- 2 370 754
- US-A1- 2007 169 720
- US-A1- 2009 223 008

## Beschreibung

Die nachfolgende Erfindung betrifft einen rotierbaren Reinigungskopf und eine Reinigungsvorrichtung für Haare und Fell.

Fell- und Haarbürsten sind bekannt. Neben manuell zu bedienenden Bürsten werden auch elektrisch betriebene angeboten, etwa rotierende Warmluftbürsten. Um Bürsten zu reinigen und beim Bürsten herausgezogene Haare zu lösen sind u. a. auch zylindrische, nicht rotierende Bürsten bekannt, bei denen alle Borsten gleichzeitig in einen Grundkörper eingezogen werden können, damit die Haare von den Borsten abgezogen werden.

Die DE 20 2010 008 499 U1 beschreibt eine Haarbürste mit einziehbaren flexiblen Borsten, die ein ortsfestes Außenrohr mit Borstendurchtrittsöffnungen und einen drehbar in dem Außenrohr gelagerten Borstenträger aufweist. Das Außenrohr ist drehfest mit einem Griff verbunden, während der Borstenträger eine Kulissenführung aufweist, mit der eine von einer Betätigungsvorrichtung am Griff erzeugte Linearbewegung in eine Rotationsbewegung gewandelt werden kann. Beim Betätigen der Betätigungsvorrichtung dreht sich der Borstenträger, wodurch alle Borsten unter Durchbiegung nach innen durch die Durchtrittsöffnungen gezogen werden. Dabei lösen sich die Haare von den einzelnen Borsten.

Auch aus DE 200 19 552 U1 ist eine ähnliche Bürste mit einziehbaren Borsten bekannt, bei der der Mechanismus zum Einziehen der Borsten nach dem gleichen Prinzip wie bei der vorstehenden Schrift funktioniert. Zusätzlich sind die Borsten dort jedoch schwenkbar um eine Schwenkachse parallel zur Längsachse des Borstenträgers an dem Borstenträger gelagert, sodass auch starre Borsten eingezogen werden können.

DE 202004009333 U1 zeigt eine Vorrichtung zum Aufnehmen haarähnlicher Fäden mit einem runden Drehkörper mit Borsten, wobei der Drehkörper von einer Welle angetrieben wird. Die Vorrichtung weist einen Abstreifring auf, dessen Mittelpunkt nicht mit dem Mittelpunkt des Drehkörpers übereinstimmt.

Einfachere Bürstvorrichtungen ohne das Einziehprinzip sind ebenfalls bekannt: Auch die US 2009/0223008 A1 offenbart eine Bürstvorrichtung, die aus zwei miteinander korrespondierenden Bürstenrollen besteht, wobei die von der letzten Bürstenrolle aufgenommenen Haare an einer Sammelvorrichtung abgestreift werden. Die US 2007/0169720 A1 hingegen offenbart eine einfache Bürstenrolle mit Abstreifkante. Alternativ zum Abstreifen ist aus GB 2 370 754 eine Vorrichtung bekannt, die das Absaugen einer Bürste in der Vorrichtung beschreibt.

Ausgehend von diesem Stand der Technik liegt der vorliegenden Erfindung die Aufgabe zu Grunde, einen verbesserten rotierbaren Reinigungskopf zu schaffen, der es ermöglicht, einen Reinigungsvorgang kontinuierlich auszuführen. Diese Aufgabe wird durch einen rotierbaren Reinigungskopf mit den Merkmalen des unabhängigen Anspruchs 1 gelöst.

Darüber hinaus ergibt sich die Aufgabe, eine Reinigungsvorrichtung zur händischen kontinuierlichen Reinigung von Haaren und Fell zu schaffen.

Diese Aufgabe wird durch eine Reinigungsvorrichtung mit den Merkmalen des Anspruchs 10 gelöst.

Weiterbildungen der Vorrichtungen werden durch die Unteransprüche beschrieben.

Der erfindungsgemäße Reinigungskopf für Haare und Fell weist in einer ersten Ausführungsform einen rotierbaren hohlen zylindrischen Grundkörper auf, aus dem sich mehrere Reinigungselemente nach außen erstrecken. Erfindungsgemäß ist in dem Grundkörper ortsfest ein Steuerzylinder exzentrisch und in Bezug zu der Längsachse des Grundkörpers parallel angeordnet. Die Reinigungselemente erstrecken sich von der Mantelfläche des Steuerzylinders weg und sind in Führungsöffnungen, die der Grundkörper hat, in Abhängigkeit des Drehwinkels des Grundkörpers verschiebbar gelagert.

In einer weiteren Ausführungsform können die Reinigungselemente in Abhängigkeit des Drehwinkels des Grundkörpers in diesen versenkt werden, so dass sie sich nicht mehr oder im Wesentlichen nicht mehr über die Oberfläche des Grundkörpers hinaus erstrecken. Dabei bleiben durch das Zurückziehen Schmutzreste und heraus gebürstete Haare an der Oberfläche des Grundkörpers liegen und fallen quasi ab. Mit "im Wesentlichen" ist daher also gemeint, dass sich die Reinigungselemente nur noch höchstens so weit aus der Oberfläche herausstrecken, so dass eben der Schmutz nicht mehr an ihnen hängen bleibt und saubere Reinigungselemente weiter reinigen können, wenn sich der Steuerzylinder dreht - vorteilhaft ist also zur Reinigung der Reinigungselemente keine manuelle Tätigkeit erforderlich.

Die Reinigungselemente können insbesondere radial in Bezug zum Grundkörper geführt sein, wobei es auch möglich ist, dass die Reinigungselemente in einem von der radialen Richtung abweichenden Winkel darin geführt sind.

Es kann sowohl vorgesehen sein, dass die Reinigungselemente einzeln oder aber auch in Gruppen aus ihrer ausgefahrenen Ruhestellung in den Grundkörper eingezogen werden können.

Anders als bei bekannten rotierbaren Reinigungsköpfen liegt beim erfindungsgemäßen Reinigungskopf eine Zwangskopplung der Verschiebeposition der Reinigungselemente und der Rotationsposition des Grundkörpers vor, die durch die exzentrische Anordnung des Steuerzylinders ermöglicht wird, auf dessen Mantelfläche die Reinigungselemente abgleiten.

Bisherige Reinigungsvorrichtungen kannten entweder die Versenkbarkeit der Borstengesamtheit oder aber die Rotation. Zur Reinigung des Reinigungskopfs selbst war es bisher notwendig, den Reinigungsvorgang zu unterbrechen um die Borstengesamtheit einzuziehen. Beim erfindungsgemäßen Reinigungskopf hingegen werden die einzelnen Reinigungselemente oder Reinigungselementegruppen periodisch eingezogen und somit wird während des Reinigungsvorgangs eine automatische Abreinigung der Reinigungselemente von Haaren oder anderen Verschmutzungen, die sich bei der Reinigung in den Reinigungselementen verhakt haben, ermöglicht. So kann der erfindungsgemäße Reinigungskopf kontinuierlich und ohne händische Zwischenreinigung benutzt werden. Der erfindungsgemäße Reinigungskopf kann außer zur Reinigung von Haaren und Fell auch zur Reinigung von Langhaarteppichen, oder allgemein "haarigen" Oberflächen eingesetzt werden.

Weiter kann der Steuerzylinder einen elliptischen oder nockenförmigen Querschnitt aufweisen.

Er kann massiv oder als Hohlkörper mit Innenverstrebung ausgebildet sein.

Die Abmessungen, Form und/oder Positionierung des Steuerzylinders im Innenraum des Grundkörpers kann/können in Abhängigkeit der individuellen Anforderungen an eine bestimmte Reinigungsaufgabe angepasst werden. So kann insbesondere die Höhenposition einzelner Reinigungselemente oder Reinigungselementegruppen durch geeignete Gestaltung des Steuerzylinders variabel als Funktion des Drehwinkels des Grundkörpers gestaltet werden. Die Reinigungselemente gleiten dabei im Wesentlichen umfänglich auf der Mantelfläche des Steuerzylinders ab, wobei ihre Ausfahrposition aus dem Grundkörper durch die Spaltweite zwischen der inneren Mantelfläche des Grundkörpers und der äußeren Mantelfläche des Steuerzylinders bestimmt wird. Ein hohler Grundkörper mit Verstrebungen erlaubt es, einen vergleichsweise leichtgewichtigen Reinigungskopf zu bauen, während die Belastbarkeit des Steuerzylinders mit der Belastbarkeit des massiven Steuerzylinders vergleichbar ist.

Darüber hinaus kann sich der Steuerzylinder an einem oder beiden Enden über das jeweilige längsaxiale Ende des Grundkörpers hinaus erstrecken. Dort kann er einen Aufnahmeabschnitt bilden, der dazu vorgesehen ist, drehfest in einer Lagerungsvorrichtung aufgenommen zu werden. Der Steuerzylinder ist also drehfest im Bezug der Lagerungsvorrichtung, während der Grundkörper zur Erfüllung der Reinigungsfunktion drehbar um diesen gelagert ist.

Ferner können die Reinigungselemente angular versetzt in Reihen parallel zur Längsachse des Grundkörpers angeordnet sein.

Die Reinigungselemente sind dabei wie Zinken in Kämmen gruppiert und entsprechend einem Kamm, kann dann eine Reihe Zähne bzw. Reinigungselemente über eine gemeinsame Reinigungselementebasis verbunden sein. In diesem Fall heben und/oder senken sich die Reinigungselemente entsprechend als Kamm, dessen Basis in diesem Falle auf dem Steuerzylinder abgleitet. Besonders vorteilhaft können die Reinigungselementebasen an ihrer der Mantelfläche des Steuerzylinders zugewandten Seite eine gleitfördernde Oberfläche haben. Sie können ferner Gleitnuten aufweisen, die in Umfangsrichtung des Steuerzylinders ausgerichtet sind. Die Gleitnuten tragen vorteilhaft dazu bei, dass der erfindungsgemäße Reinigungskopf auch bei eindringendem Schmutz weiterhin funktioniert.

Gemäß einer weiteren Ausführungsform kann eine Rückholvorrichtung operativ mit den Reinigungselementen verbunden sein, die dazu vorgesehen ist, eine Rückholkraft auf die Reinigungselemente auszuüben. Sie bewirkt, dass die Reinigungselemente bzw. Reinigungselementebasen auf der Oberfläche des Steuerzylinders aufliegen. Die Rückholvorrichtung bewirkt, dass sich die Reinigungselemente ohne externe Krafteinwirkung in den Grundkörper zurückziehen. Der Steuerzylinder alleine kann lediglich die Ausfahrbewegung steuern, jedoch nicht die Einfahrbewegung der Reinigungselemente.

Die Rückholvorrichtung kann einen oder mehrere Elastomerringe aufweisen, der oder die über die Reinigungselementebasen gestreift ist/sind. Der oder die Elastomerring(e) sollten dabei zumindest über ein Ende der längsaxialen Endabschnitte der Reinigungselementebasen gestreift sein.

Die Rückholvorrichtung kann auch eine Zwangssteuerungsvorrichtung mit einer umlaufenden Steuergasse umfassen. Diese kann insbesondere in einem oder beiden längsaxialen Endabschnitten des Steuerzylinders vorliegen und parallel zu einer Außenkontur des Steuerzylinders verlaufen. Die längsaxialen Endabschnitte der Reinigungselementebasen sind dabei in der Steuergasse geführt.

Bei entsprechender Ausgestaltung der Oberflächen der Steuergasse und/oder der längsaxialen Endabschnitte der Reinigungselementebasen tritt durch das Abgleiten der Endabschnitte in der Steuergasse kaum Verschleiß auf, während der Elastomerring stark wechselbeansprucht ist und daher schneller zum Versagen neigt. Zudem ist das aufzubringende Moment zur Rotation des Grundkörpers deutlich größer wenn der Elastomerring eingesetzt wird, da zwischen der äußeren Mantelfläche des Steuerzylinders und den Reinigungselementen eine Reibkraft erzeugt wird und zum Ausfahren der Reinigungselemente stets die Rückstellkraft des Elastomerrings überwunden werden muss, während bei der Ausführungsform mit Zwangssteuerung ein deutlich geringeres Antriebsmoment ausreicht. Wenn ein Steuerzylinder aus Kunststoff zum Einsatz kommt und gängige großserienerprobte Fertigungsverfahren wie Spritzgießen verwendet werden, ist die beschriebene Steuergasse quasi ohne Mehrkosten realisierbar.

Die Reinigungselemente verjüngen sich bevorzugt in einem aus der Mantelfläche des Grundkörpers herausragenden Endabschnitt, es können Borsten, Zinken oder Zähne sein. Besonders vorteilhaft sind asymmetrische Zähne, die eine in Bewegungsrichtung des Grundkörpers ansteigende Spitzenform haben - diese sind besonders geeignet, wenn der Reinigungskopf mit einer Abstreifvorrichtung kombiniert wird - ferner erlauben Zähne mit asymmetrischer Spitzenform eine besonders effektive Haar- bzw. Fellreinigung, da der "Eintauchwinkel" der Zähne in die Fellstruktur vergleichsweise steil ist; die Zähne verhaken sich quasi im Fell um lose Haare effektiv herauszubürsten.

Schließlich kann der Grundkörper drehfest und konzentrisch mit einem Drehmomentüberträger verbunden sein. Bei dem Drehmomentüberträger kann es sich um ein Antriebszahnrad handeln, wobei vorteilhafterweise die innere Mantelfläche des Antriebszahnrads auf einem Lagerungsabschnitt des Steuerzylinders drehbar gelagert ist. Neben dem Antriebszahnrad können auch andere Drehmomentübertragungsvorrichtungen geeignet sein, etwa eine Keilwellenverzahnung, kraftschlüssige Drehmomentübertragungsvorrichtungen oder andere formschlüssige Drehmomentübertragungsvorrichtungen, wie Passfederverbindungen. Der Drehmomentüberträger ist dazu vorgesehen, operativ mit einer Antriebsvorrichtung gekoppelt zu werden. Das Antriebszahnrad kann einstückig mit dem Grundkörper ausgebildet sein oder aber als eigenständiges Bauteil und etwa stoffschlüssig oder unter Zuhilfenahme von Befestigungsvorrichtungen daran gefügt sein.

Eine weitere Erfindung, die den erfindungsgemäßen Reinigungskopf umfasst, ist eine Reinigungsvorrichtung für Haare und Fell, die einen Haltearm hat, der mit dem eben beschriebenen angetriebenen Reinigungskopf verbunden ist.

Der Antrieb des Reinigungskopfs kann über sämtliche bekannte Antriebsarten erfolgen, grundsätzlich auch manuell.

In einer weiteren Ausführungsform ist mit dem Haltearm eine ortsfeste Abstreifvorrichtung verbunden, die parallel zu der Längsachse des Reinigungskopfs angeordnet ist. Zwischen einer Abstreifkante der Abstreifvorrichtung und der Oberfläche des Grundkörpers liegt hierbei ein Abstreifspalt vor. Die Weite des Abstreifspalts kann an eine zu erledigende Reinigungsaufgabe bzw. an das zu erwartende Verschmutzungsniveau angepasst werden. Der Abstreifspalt darf nicht zu schmal gewählt werden, da die gesamte Reinigungsvorrichtung ansonsten durch übermäßige Schmutzansammlung blockieren könnte. Es kann sogar vorgesehen sein, dass die Weite des Reinigungsspalts unter Verwendung einer Einstellvorrichtung, etwa eines Bewegungsgewindes, einstellbar ist.

Gemäß einer noch weiteren Ausführungsform der Reinigungsvorrichtung können die Reinigungselemente des Reinigungskopfs sich an einer Winkelposition der Abstreifkante, höchstens aber bis um den Betrag des Abstreifspalts aus der Mantelfläche des Grundkörpers in den Abstreifspalt erstrecken. Hierdurch soll erreicht werden, dass die Reinigungselemente die Reinigungsvorrichtung nicht berühren. Das Einziehverhalten der Reinigungselemente bzw. Reinigungselementereihen ist dabei durch geeignete Auslegung des Steuerzylinders bzw. seiner Form, Abmessungen und Positionierung innerhalb des Innenraums des Grundkörpers so auszulegen, dass sich sämtliche Reinigungselemente, bevor sie in Bewegungsrichtung an der Abstreifkante vorbeilaufen, mindestens so weit in den Grundkörper zurückziehen, dass der Abstreifspalt freigegeben wird. Bei der Abstreifvorrichtung kann es sich im einfachsten Fall um einen Blechstreifen handeln, dessen eine Kante die Abstreifkante bildet und der in einem mit dem Außenradius des Grundkörpers korrespondierenden Radius gebogen sein kann. Der Biegeradius des Abstreifblechs kann jedoch auch dem Außenradius des Grundkörpers entsprechen. Es kann auch vorgesehen sein, dass an der Abstreifkante eine zusätzliche Abstreiflippe oder Abstreifbürste gelegen ist, die eine weiter verbesserte Reinigung der Oberfläche des Grundkörpers ermöglichen soll.

Darüber hinaus kann eine Auffangvorrichtung, bei der es sich um einen Auffangsack oder Auffangbehälter mit starrer Hülle handeln kann, in Bewegungsrichtung hinter der Abstreifvorrichtung am Reinigungskopf angeordnet sein und die vorteilhaft die Abstreifvorrichtung umfasst.

Die Auffangvorrichtung kann auswechselbar am Reinigungskopf angeordnet sein. Alternativ oder zusätzlich kann an der Abstreifvorrichtung ein Absaugsammler angeordnet sein, der entlang einer Absaugöffnung geöffnet ist und der sich parallel zu der Abstreifkante erstreckt. Der Absaugsammler kann darüber hinaus einen Absaugport aufweisen, an den eine Absaugvorrichtung angeschlossen werden kann.

"Angeordnet an" bedeutet hier nicht, dass der Absaugsammler tatsächlich mechanisch mit dem Reinigungskopf verbunden sein muss, sondern lediglich, dass er im engeren räumlichen Bereich des Reinigungskopfs respektive der Abstreifvorrichtung vorliegt; er kann problemlos auch an der Lagerungsvorrichtung oder anderen ortsfesten Bauteilen der Reinigungsvorrichtung angeordnet werden. Erst unter Verwendung der Auffangvorrichtung und/oder Absaugvorrichtung ergibt sich eine optimal hygienische und rückstandsfreie Reinigung, da die Umgebung bei der Reinigung weitestgehend sauber bleibt. Die Absaugvorrichtung kann eine externe Saugpumpe oder auch in die Reinigungsvorrichtung integriert sein, wobei es insbesondere vorgesehen sein kann, die Absaugvorrichtung durch den gleichen Antriebsmotor anzutreiben, der auch den Grundkörper antreibt.

Noch weiter kann die Antriebsvorrichtung einen Antriebsmotor aufweisen, der etwa ein Elektromotor, Pneumatikmotor oder Hydraulikmotor sein kann. Der Antriebsmotor kann ferner über ein Getriebe operativ mit dem Drehmomentüberträger des Grundkörpers des Reinigungskopfs gekoppelt sein. Alternativ oder zusätzlich kann die Antriebsvorrichtung auch einen Energiespeicher aufweisen, etwa einen Akkumulator, der an der Antriebsvorrichtung angeordnet ist und der operativ mit der Antriebsvorrichtung gekoppelt ist. Ferner kann der Reinigungskopf zwischen einem ersten Lagerbügel und einem zweiten Lagerbügel drehbar gelagert sein, wobei der erste Lagerbügel und der zweite Lagerbügel durch einen Verbindungsabschnitt mechanisch verbunden sein können.

Insbesondere kann ein elektrischer Stabmotor verwendet werden, wie er etwa aus Elektrowerkzeugen wie Akkuschraubern bekannt ist, und der einen in den Stab integrierten Akku hat. Der erste Lagerbügel, zweite Lagerbügel und der Verbindungsabschnitt bilden die "kraftleitende Struktur" der Reinigungsvorrichtung, also deren Lagerungsvorrichtung. Der Antriebsmotor kann parallel oder senkrecht zur Drehachse des Reinigungskopfs angeordnet sein, wobei auch andere Getriebebauarten als Stirnradgetriebe zum Einsatz kommen können, etwa platzsparende Planetengetriebe. Der Antriebsmotor kann jedoch auch den Reinigungskopf direkt antreiben.

Gemäß einer weiteren Ausführungsform kann der Verbindungsabschnitt parallel zur Längsachse des Reinigungskopfs angeordnet sein und bevorzugt einen Hohlzylinder umfassen. Alternativ oder zusätzlich kann die Antriebsvorrichtung zumindest teilweise in einem Aufnahmeabschnitt des Verbindungsabschnitts ortsfest aufgenommen sein.

Die Außenform eines rohrförmigen Verbindungsabschnitts eignet sich dabei besonders gut zur Aufnahme eines Elektromotors. Der zur Verfügung stehende Bauraum wird hierdurch optimal ausgenutzt, wodurch die Reinigungsvorrichtung sehr kompakt gebaut werden kann. Die operative Kopplung des Antriebsmotors und des Drehmomentüberträgers des Grundkörpers des Reinigungskopfs kann in dieser Ausführungsform über ein ein- oder mehrstufiges Stirnradgetriebe erfolgen, dessen Übersetzungsverhältnis jeweils an die Reinigungsaufgabe und die Kennlinie des Motors angepasst werden kann.

Der erste Lagerbügel und/oder der zweite Lagerbügel kann/können des Weiteren eine Aufnahmevorrichtung aufweisen, in der der Aufnahmeabschnitt des Steuerzylinders drehfest aufgenommen und bevorzugt verschraubt ist. Die Reinigungsvorrichtung kann ferner einen Griff aufweisen, der bevorzugt mit dem Verbindungsabschnitt verbunden ist und/oder sich senkrecht von dem Verbindungsabschnitt erstreckt. Der Griff kann jedoch auch vom Antriebsmotor gebildet werden.

Insbesondere, wenn es sich bei dem Antriebsmotor um einen Stabmotor handelt, der sich entlang eines Teils seiner Längsachse frei erstreckt, kann durch den Antriebsmotor selbst ein ergonomischer Griff gebildet werden, ähnlich wie bei einem Stabschrauber. In der Ausführungsform, in der der Verbindungsabschnitt auch den Antriebsmotor aufnimmt kann es für eine angenehme Gewichtsverteilung der Reinigungsvorrichtung vorteilhaft sein, wenn der Griff Ausgleichsgewichte enthält.

Schließlich kann der erste Lagerbügel lösbar mit dem Verbindungsabschnitt verbunden sein, etwa verschraubt, und kann selbst eine Abdeckung für das Getriebe bilden. Der zweite Lagerbügel kann eine Rückholvorrichtung mit einer Steuergasse aufweisen, die im Wesentlichen parallel zu der Außenkontur des Steuerzylinders verläuft und in der die freien Endabschnitte der Reinigungselementebasen geführt sind.

In einer vorteilhaften Ausführungsform kann die durch die Steuergasse gebildete Zwangssteuerungsvorrichtung an einem längsaxialen Ende des Reinigungskopfs am Führungszylinder vorliegen und am abgewandten längsaxialen Ende des Reinigungskopfs am Lagerbügel. Hierdurch wird eine problemlose Montage der Reinigungsvorrichtung sichergestellt.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung.

Es zeigen:
- **Fig. 1**: eine perspektivische Schnittansicht der Reinigungsvorrichtung,
- **Fig. 2**: eine weitere perspek. Schnittansicht der Reinigungsvorrichtung,
- **Fig. 3**: eine perspektivische Teileinsicht der Reinigungsvorrichtung,
- **Fig. 4**: einen Längsschnitt eines Teils der Reinigungsvorrichtung,
- **Fig. 5**: eine perspektivische Ansicht der Reinigungsvorrichtung,
- **Fig. 6**: eine Seitenansicht der Reinigungsvorrichtung,
- **Fig. 7**: eine Draufsicht der Reinigungsvorrichtung.

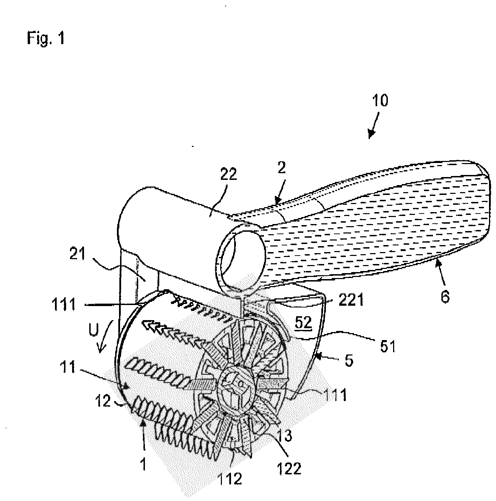

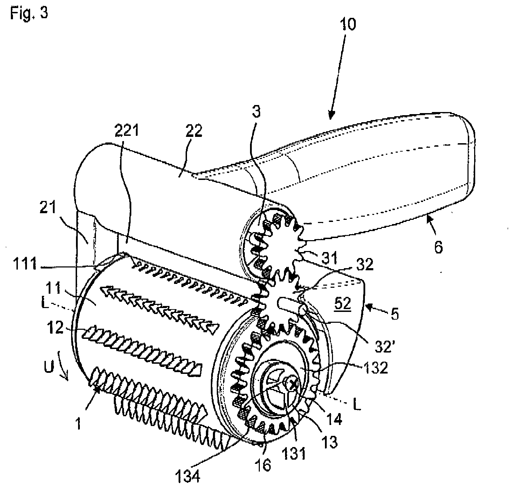

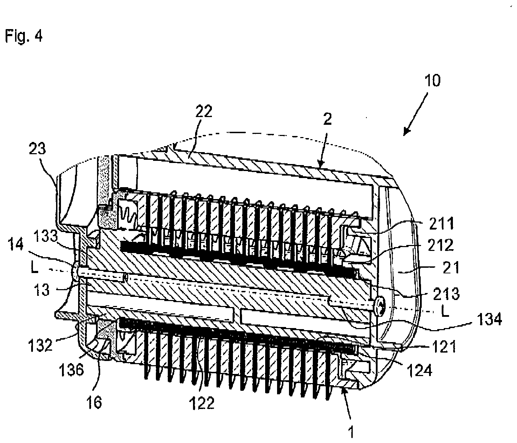

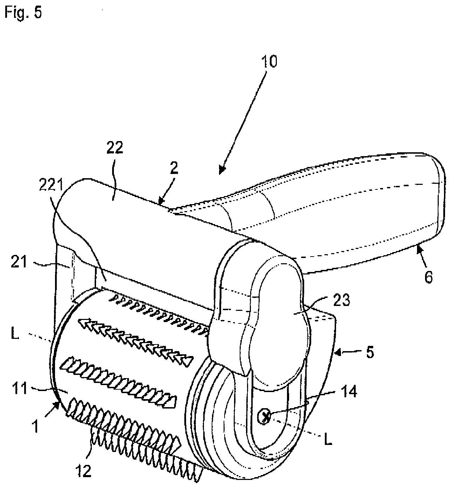

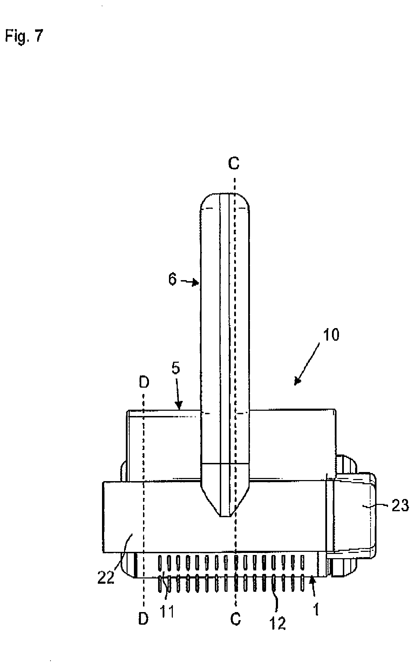

In **Fig. 1** ist eine beispielhafte erfindungsgemäße Reinigungsvorrichtung 10 in einer perspektivischen Ansicht dargestellt, wobei die Reinigungsvorrichtung 10 in der Schnittebene C-C (siehe **Fig. 7**) geschnitten ist. Im Grunde bilden Lagerungsvorrichtung 2 und der Griff 6 eine Halterung für den Reinigungskopf 1. In **Fig. 1** ist der Verbindungsabschnitt 22 der Lagerungsvorrichtung 2 der Reinigungsvorrichtung 10 gezeigt, der parallel zur Längsachse des Reinigungskopfs 1 verläuft und der eine Rippe 221 hat. Die Lagerungsvorrichtung 2 umfasst ferner einen ersten Lagerbügel 23 (siehe **Fig. 4** und **Fig. 5**) und einen zweiten Lagerbügel 21 und bildet quasi das "Gehäuse", das eine kraftleitende Funktion hat und in der der Reinigungskopf 1 mit dem Rotationsfreiheitsgrad um die Längsachse gelagert ist. Der Reinigungskopf 1 zeigt einen hohlen kreiszylindrischen Grundkörper 11, der Führungen 111 für die Zähne 12 aufweist, die radial im Grundkörper 11 angeordnet sind. Die Führungen 111 (siehe **Fig. 3**) der Zähne 1 sind an die innere Mantelfläche des Grundkörpers 11 angegossen. Der Grundkörper 11 hat eine vergleichweise geringe Wandstärke, während die Führungen 111 relativ weit nach radial innen reichen, um Verkanten der Zähne 12 zu verhindern.

Die Zähne 12 sind in angular versetzten Reihen als Kämme angeordnet. Je eine Zahnreihe ist dabei über eine gemeinsame Zähnebasis 122 parallel zur Längsachse des Grundkörpers 11 verbunden, wobei die Längsachse des Grundkörpers 11 mit der Achse der Gewindebohrung 134 des Steuerzylinders 13 zusammenfällt. Der Reinigungskopf 1 reinigt so Felle oder Teppiche oder ähnliches rotierend. Die Rotationsrichtung zur Reinigung ist mit U bezeichnet. Aufgrund der asymmetrischen Form der Reinigungszähne 12, die sich in Bewegungsrichtung U verjüngen, hat der Reinigungskopf 1 in der gezeigten Ausführungsform eine bevorzugte Bewegungsrichtung. Hat der Reinigungskopf 1 hingegen symmetrische Reinigungselemente 12 kann die Reinigung durchaus in beiden Drehrichtungen erfolgen.

Im Innenraum 112 des Grundkörpers 11 ist parallel und exzentrisch zur Längsachse ein elliptischer Steuerzylinder 13 angeordnet, auf dem die Zähne 12 mit ihrer Innenseite abgleiten, genauer gesagt gleiten die Zähne 12 mit ihrer Reinigungselementebasis 122 darauf ab. Bei einer Drehung des Grundkörpers 11 werden die Zähne 12 mitgedreht, der Steuerzylinder 13 bleibt jedoch ortsfest. Die Zähne 12 werden durch die drehwinkelabhängige Veränderung des Abstands zwischen dem Steuerzylinder 13 und der inneren Mantelfläche des Grundkörpers 11 pro Umdrehung des Grundkörpers 11 von einer vollständig versenkten in eine vollständig ausgefahrene Stellung überführt. In der gezeigten Ausführungsform gibt es im unteren Bereich des Grundkörpers einen vergleichsweise großen Drehwinkelbereich, in dem die Zähne 12 auf Höchststellung bleiben; dieser Bereich ist der Reinigungs-Winkelbereich.

Damit die Reinigungselementebasen 122 besonders gut auf dem Steuerzylinder 13 abgleiten, haben sie in ihrem "Fußbereich" einen abgerundeten Querschnitt, was in jeder Winkelposition einen verschleißarmen Linienkontakt mit dem Steuerzylinder 13 ermöglicht. Die drehwinkelabhängige Höhenstellung der Zähne 12 kann an individuelle Anforderungen durch Anpassung des Querschnitts und der Positionierung des Steuerzylinders 13 erreicht werden. In der dargestellten Ausführungsform ist ein Behälter 5 als Auffangbehälter 5 gezeigt, der zugleich so geformt ist, dass er die Abstreifvorrichtung 51 integral umfasst und eine Abstreifkante aufweist. Zwischen der Abstreifkante der Abstreifvorrichtung 51 und der Oberfläche des Grundkörpers 11 ist ein Abstreifspalt. Der Steuerzylinder 13 ist nun so ausgebildet und positioniert, dass die Zähne 12 in Reihen, bevor sie in Bewegungsrichtung U die Abstreifkante passieren, in den Grundkörper 11 eingezogen werden, wobei durch das Einziehen verhakte Haare und anderer Schmutz von den Reinigungszähnen 12 gestreift wird, während die Abstreifkante die Oberfläche des Grundkörpers 11 reinigt und verhindert, dass abgestreifter Schmutz "mitgezogen" wird, insbesondere, wenn an der Abstreifkante ein Lippe oder Bürstenleisten angeordnet ist/sind, was in der Figur jedoch nicht gezeigt ist.

Von der Abstreifvorrichtung 51 abgestreifter Schmutz wird im Innenraum 52 des Auffangbehälters 5 aufgenommen, so dass bei der Reinigung die Umgebung nicht verunreinigt wird. An dem Auffangbehälter 5 kann auch ein Absaugport angeordnet werden, der mit einem Staubsauger verbunden werden kann.

Der erfindungsgemäße Reinigungskopf 1 selbst kann an portablen Handgeräten oder an ortsfesten Reinigungsvorrichtungen eingesetzt werden, etwa zur Teppich- oder Tierreinigung.

Mit dem erfindungsgemäßen Reinigungskopf 1 ist es erstmals möglich, selbst stark haarende Tiere im Fellwechsel kontinuierlich zu reinigen, ohne ständig die Bürste putzen zu müssen, da die erfindungsgemäße Reinigungsvorrichtung eine automatische Abreinigung der Zähne 12 bietet, die bei jeder Umdrehung des Reinigungskopfs 1 durchgeführt wird, wodurch die Zähne 12, und, bei Verwendung einer Abstreifkante mit Lippe oder Bürstenleiste, sogar der Grundkörper 11 kontinuierlich während der Benutzung gereinigt werden.

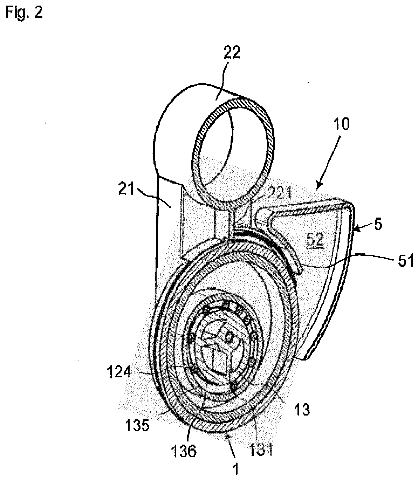

In **Fig. 2** ist eine perspektivische Ansicht der Reinigungsvorrichtung 10 zu sehen, wobei die Reinigungsvorrichtung 10 in der Ebene D-D (siehe **Fig. 7**) geschnitten ist. Hier ist ein Endabschnitt des Steuerzylinders 13 zu sehen, der von der Rückholvorrichtung 135 umgeben ist, die die Steuergasse 136 aufweist. In der Steuergasse 136 sind die längsaxialen freien Enden der Zähnebasen 122 geführt, wodurch eine Zwangssteuerung der Höhe der Zähne nach dem Prinzip der "Führungskulisse" ermöglicht wird.

Über die Abmessung, Kontur und Position des Steuerzylinders 13, respektive der parallel dazu verlaufenden Steuergasse 136, wird sowohl das Ausfahren als auch das Versenken der Zähne gesteuert. Dies hat den Vorteil, dass bei Verwendung eines Gummirings zur Rückholung viel weniger Verschleiß auftritt. Die Rückholvorrichtung 135 mit Steuergasse 136 kann vorteilhaft in einem Fertigungsschritt zusammen mit dem Steuerzylinder 13 hergestellt werden, etwa durch Spritzgießen, so dass keine Zusatzkosten entstehen. Der Grundkörper 11 des Reinigungskopfs 1 ist drehbar in dem ersten Lagerbügel 23 gelagert, während der Steuerzylinder 13 drehfest zum ersten Lagerbügel 23 ist. Der Steuerzylinder 13 ist im Übrigen materialsparend ausgeführt; er ist im Wesentlichen hohl und hat Verstrebungen 131, die kraftflussgerecht ausgerichtet sind.

In der Ansicht der Reinigungsvorrichtung 10 in **Fig. 3** ist der erste Lagerbügel 23 (siehe **Fig. 5**) ausgeblendet, damit das darunter liegende Getriebe sichtbar ist. In dem hier ausgeblendeten ersten Lagerbügel 23 (siehe **Fig. 5**) ist das eine Ende des Steuerzylinders 13 drehfest angeordnet, während der Grundkörper 11 drehbar auf dem Steuerzylinder 13 gelagert ist. An dem anderen längsaxialen Ende des Reinigungskopfs 1 ist dieser im zweiten Lagerbügel 21 gelagert, während der erste Lagerbügel 23 (siehe **Fig. 5**) und der zweite Lagerbügel 21 über den Verbindungsabschnitt 22, bei dem es sich um ein Hohlrohr handelt, verbunden sind. Mit der Antriebswelle des Antriebsmotors 3 ist ein Antriebszahnrad 31 drehfest verbunden, das in Eingriff mit dem Zwischenzahnrad 32 steht, das wiederum mit dem Abtriebszahnrad 16 des Reinigungskopfs 1 in Eingriff steht. Das Zwischenzahnrad 32 ist mit seinem Wellenabschnitt 32' einseitig in dem nicht dargestellten ersten Lagerbügel 23 drehbar gelagert (siehe **Fig. 5**). Der Griff 6 ist hier senkrecht zum Verbindungsabschnitt 22 angeordnet und mit dem Verbindungsabschnitt 22 verbunden. Vorteilhaft kann der Griff 6 einstückig mit dem Verbindungsabschnitt 22 ausgebildet sein, etwa als ein Teil spritzgegossen.

**Fig. 4** zeigt einen Längsschnitt eines Teils der Reinigungsvorrichtung 10 entlang der Längsmittelebene des Reinigungskopfs 1. Der Steuerzylinder 13 ist zwischen dem ersten Lagerbügel 23 und dem zweiten Lagerbügel 21 drehfest gelagert, wobei die beiden Lagerbügel 21,23 über den Verbindungsabschnitt 22 verbunden sind und zusammen mit diesem die Lagerungsvorrichtung 2 bilden (siehe auch **Fig. 5**). Der Steuerzylinder 13 erstreckt sich beidenends längsaxial über den Grundkörper 11 hinaus und bildet in diesem Bereich jeweils einen Aufnahmeabschnitt 133, in dem er formschlüssig in den jeweiligen Lagerbügeln 21,23 aufgenommen ist, wobei eine Befestigungsschraube 14 zum Einsatz kommt, um die Axialposition vorzugeben. Die drehbare Lagerung des Grundkörpers 11 erfolgt auf der in der Figur linken Seite auf dem Lagerungsabschnitt 132 des Steuerzylinders 13, während auf der in der Figur rechten Seite des Grundkörpers 11 die drehbare Lagerung in einem umlaufenden Lagerungsabschnitt 211 des zweiten Lagerbügels 21 erfolgt. Das Abtriebszahnrad 16 ist hier als separates Bauteil ausgeführt, das drehfest mit dem Grundkörper 11 verbunden ist und das in Eingriff mit dem Zwischenzahnrad 32 steht. Vorteilhaft sind die beiden Zahnräder 16,32 vor Schmutz geschützt innerhalb des ersten Lagerbügels 23 angeordnet, der quasi das Getriebegehäuse bildet.

Gut ist hier auch die kammartige Anordnung der Zähne 12 an gemeinsamen Zähnebasen 122 zu erkennen. Die freien Endabschnitte 124 sind jeweils in Steuergassen 136,213 geführt, die der Zwangsführung der Zähnebasen 122 dienen. An dem in der Figur linken Ende des Steuerzylinders 13 liegt die Steuergasse 136 in dem Steuerzylinder 13 selbst vor, während am rechten Ende des Steuerzylinders 13 die Steuergasse 213 zwischen der Mantelfläche des Steuerzylinders 13 und der Rückholvorrichtung 212 des zweiten Lagerbügels gebildet wird. Diese Anordnung ist notwendig, um die Zähnebasen 122 überhaupt zwischen die beiden Rückholvorrichtungen 135,212 montieren zu können. Die Rückholvorrichtungen 135,212 sorgen dafür, dass die Zähnebasen 122 auf der Oberfläche des Steuerzylinders 13 anliegen bzw. unter Bewegung des Grundkörpers 11 darauf abgleiten. Um ein besonders sanftes sowie geräusch- und verschleißarmes Abgleiten zu ermöglichen, haben die Zähnebasen 122 Gleitnuten 121, die in Umfangsrichtung des Grundkörpers 11 verlaufen.

In **Fig. 5** ist schließlich die komplette Reinigungsvorrichtung 10 dargestellt, die den Antriebsmotor (in dem Verbindungsabschnitt 22 geführt), den Reinigungskopf 1, den Auffangbehälter 5, die Lagerungsvorrichtung 2 und den daran angefügten Griff 6 aufweist. Der Griff 6 ist ergonomisch geformt.

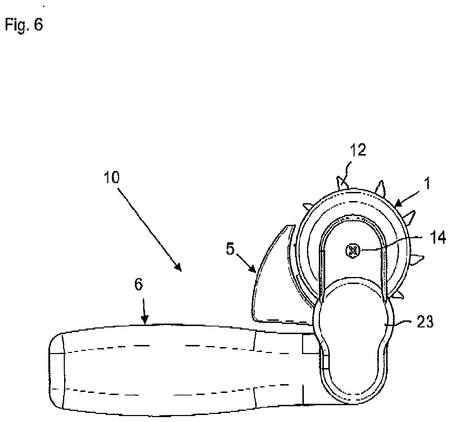

**Fig. 6** zeigt die Reinigungsvorrichtung 10 in der Seitenansicht: Die Zähne 12 ziehen sich in längsaxialen Reihen in das Innere des Grundkörpers 11 zurück bevor sie in Bewegungsrichtung U an der Abstreifkante 51 vorbei bewegt werden und werden so effizient abgestreift. Wenn der Verbindungsabschnitt 22 und der Griff 6 hohl sind, kann die Reinigungsvorrichtung 10 bei hoher Steifigkeit dennoch leicht sein.

Der Draufsicht der Reinigungsvorrichtung 10 der **Fig. 7** ist die Lage der beiden Schnittebenen C und D zu entnehmen. Ferner ist die Positionierung des Griffs 6 etwa in der längsaxialen Mitte des Reinigungskopfs 1 zu erkennen, was eine angenehm ausbalancierte Handhabung ermöglicht.

**Bezugszeichenliste**

| | |
|---|---|
| 1 | Reinigungskopf |
| 10 | Reinigungsvorrichtung |
| 11 | Grundkörper des Reinigungskopfs |
| 111 | Führung im Grundkörper |
| 112 | Innenraum des Grundkörpers |
| 12 | Reinigungselemente, Zähne |
| 121 | Gleitnuten der Reinigungselemente |
| 122 | Reinigungselementebasis |
| 124 | Längsaxiales freies Ende der Reinigungselementebasis |
| 13 | Steuerzylinder |
| 131 | Verstrebung des Steuerzylinders |
| 132 | Lagerungsabschnitt des Steuerzylinders |
| 133 | Aufnahmeabschnitt des Steuerzylinders |
| 134 | Gewindebohrung des Steuerzylinders |
| 135 | Rückholvorrichtung |
| 136 | Steuergasse der Rückholvorrichtung |
| 14 | Befestigungsschraube Steuerzylinder |
| 16 | Abtriebszahnrad |
| 2 | Lagerungsvorrichtung |
| 21 | Zweiter Lagerbügel |
| 211 | Lagerungsabschnitt des zweiten Lagerbügels |
| 22 | Verbindungsabschnitt |
| 22' | Aufnahmeabschnitt des Verbindungsabschnitts |
| 221 | Verstärkungsrippe des Verbindungsabschnitts |
| 23 | Erster Lagerbügel |
| 3 | Antriebsvorrichtung, Antriebsmotor |
| 31 | Antriebszahnrad |
| 32 | Zwischenzahnrad |
| 32' | Wellenabschnitt des Zwischenzahnrads |
| 5 | Auffangbehälter |
| 51 | Abstreifvorrichtung |
| 52 | Innenraum des Auffangbehälters |
| 6 | Griff |
| C | Schnittebene |
| D | Schnittebene |
| L | Längsachse des Reinigungskopfs |
| U | Bewegungsrichtung des Reinigungskopfs |

## Patentansprüche

1. Reinigungskopf (1) für Haare und Fell,
mit einem rotierbaren hohlen zylindrischen Grundkörper (11), aus dem sich eine Mehrzahl von Reinigungselementen (12) weg erstreckt, die in Abhängigkeit eines Drehwinkels des Grundkörpers (11) verschiebbar sind, wobei
- in dem Grundkörper (11) ortsfest ein Steuerzylinder (13) exzentrisch in Bezug zu und parallel zu einer Längsachse (L) des Grundkörpers angeordnet ist und
- die Reinigungselemente (12) in kammförmigen Gruppen angeordnet sind, wobei die jeweiligen Reinigungselemente (12) entlang einer gemeinsamen Reinigungselementebasis (122), die parallel zur Längsachse des Grundkörpers (11) verläuft, verbunden sind und sich von einer Mantelfläche des Steuerzylinders (13) weg erstrecken und in Führungen (111), die der Grundkörper (11) aufweist, verschiebbar gelagert sind.

2. Reinigungskopf (1) nach Anspruch 1,
**dadurch gekennzeichnet, dass**
die Reinigungselemente (12) in Abhängigkeit des Drehwinkels des Grundkörpers (11) bis in den Grundkörper (11) versenkbar sind, so dass sie sich nicht mehr oder im Wesentlichen nicht mehr über die Oberfläche des Grundkörpers (11) hinaus erstrecken.

3. Reinigungskopf (1) nach Anspruch 1 oder 2,
**dadurch gekennzeichnet, dass**
der Steuerzylinder (13)
- einen elliptischen oder nockenförmigen Querschnitt aufweist und/oder
- massiv oder als Hohlkörper mit Innenverstrebung (131) ausgebildet ist.

4. Reinigungskopf (1) nach zumindest einem der Ansprüche 1 bis 3,
**dadurch gekennzeichnet, dass**
sich der Steuerzylinder (13) zumindest einenends über ein längsaxiales Ende des Grundkörpers (11) hinaus und in einen Aufnahmeabschnitt (133) bildet, der zur drehfesten Aufnahme in einer Lagerungsvorrichtung (2) ausgebildet ist.

5. Reinigungskopf (1) nach zumindest einem der Ansprüche 1 bis 4,
**dadurch gekennzeichnet, dass**
die Reinigungselemente (12)
- in angular versetzten Reihen parallel zu der Längsachse angeordnet sind.

6. Reinigungskopf (1) nach zumindest einem der Ansprüche 1 bis 5,
**dadurch gekennzeichnet, dass**
eine Rückholvorrichtung (135,212), die eine Rückholkraft auf die Reinigungselemente (12) ausübt, operativ mit den Reinigungselementen (12) verbunden ist.

7. Reinigungskopf (1) nach Anspruch 6,
**dadurch gekennzeichnet, dass**
die Rückholvorrichtung (135,212)
- zumindest einen Elastomerring umfasst, der über die Reinigungselementebasen (122) gestreift ist, bevorzugt an einem Ende der längsaxialen Endabschnitte (124) der Reinigungselementebasen (122) und/oder
- eine Zwangssteuerungsvorrichtung umfasst, die bevorzugt eine umlaufende Steuergasse (136,213) aufweist, die besonders bevorzugt in zumindest einem längsaxialen Endabschnitt des Steuerzylinders (13) vorliegt und die parallel zu einer Außenkontur des Steuerzylinders (13) verläuft, wobei die längsaxialen Endabschnitte der Reinigungselementebasen (122) darin geführt sind.

8. Reinigungskopf (1) nach zumindest einem der Ansprüche 1 bis 7,
**dadurch gekennzeichnet, dass**
die Reinigungselemente (12) bevorzugt sich in einem aus der Mantelfläche des Grundkörpers (11) herausragenden Endabschnitt verjüngen, besonders bevorzugt Borsten, Zinken oder Zähne sind, noch stärker bevorzugt asymmetrische Zähne mit einer in Bewegungsrichtung ansteigenden Spitzenform.

9. Reinigungskopf (1) nach zumindest einem der Ansprüche 1 bis 8,
**dadurch gekennzeichnet, dass**
der Grundkörper (11) drehfest und konzentrisch mit einem Drehmomentüberträger, bevorzugt einem Antriebszahnrad (16), verbunden ist, wobei besonders bevorzugt eine innere Mantelfläche des Antriebszahnrads (16) auf einem Lagerungsabschnitt (132) des Steuerzylinders (13) drehbar gelagert ist.

10. Reinigungsvorrichtung (10) für Haare und Fell mit einem Haltearm, der mit einem angetriebenen Reinigungskopf verbunden ist,
**dadurch gekennzeichnet, dass**
der Reinigungskopf ein Reinigungskopf (1) nach zumindest einem der Ansprüche 1 bis 9 ist.

11. Reinigungsvorrichtung (10) nach Anspruch 10,
**dadurch gekennzeichnet, dass**
mit dem Haltearm eine ortsfeste Abstreifvorrichtung (51) verbunden ist, die parallel zu der Längsachse des Reinigungskopfs (1) angeordnet ist, wobei zwischen einer Abstreifkante der Abstreifvorrichtung (51) und der Mantelfläche des Grundkörpers (11) des Reinigungskopfs (1) ein Abstreifspalt vorliegt.

12. Reinigungsvorrichtung (10) nach Anspruch 10 oder 11,
**dadurch gekennzeichnet, dass**
die Reinigungselemente (12) des Reinigungskopfs (1) sich an einer Winkelposition der Abstreifkante (51) höchstens bis um den Betrag des Abstreifspalts aus der Mantelfläche des Grundkörpers (11) in den Abstreifspalt erstrecken.

13. Reinigungsvorrichtung (10) nach zumindest einem der Ansprüche 10 bis 12
**dadurch gekennzeichnet, dass**
- eine Auffangvorrichtung, bevorzugt ein Auffangsack oder Auffangbehälter (5) mit starrer Hülle, besonders bevorzugt eine die Abstreifvorrichtung (51) umfassende Auffangvorrichtung, in Bewegungsrichtung (U) des Reinigungskopfs (1) zumindest teilweise hinter der Abstreifvorrichtung (51) an dem Reinigungskopf (1) angeordnet, besonders bevorzugt auswechselbar an der Lagerungsvorrichtung (2) angeordnet ist und/oder
- an der Abstreifvorrichtung (51) ein Absaugsammler mit einer Absaugöffnung vorliegt, wobei sich die Absaugöffnung parallel zu der Abstreifkante erstreckt, und bevorzugt einen Absaugport aufweist.

14. Reinigungsvorrichtung (10) nach zumindest einem der Ansprüche 10 bis 13,
**dadurch gekennzeichnet, dass**
- die Antriebsvorrichtung (3) einen Antriebsmotor (3) umfasst, bevorzugt einen Elektromotor, Pneumatikmotor oder Hydraulikmotor, der besonders bevorzugt über ein Getriebe, am meisten bevorzugt über ein Stirnradgetriebe, operativ mit dem Drehmomentüberträger des Grundkörpers (11) des Reinigungskopfs (1) gekoppelt ist und mit der Halterung verbunden ist und/oder
- ein Energiespeicher, bevorzugt ein Akkumulator, an der Antriebsvorrichtung (3) angeordnet ist, der operativ mit der Antriebsvorrichtung (3) gekoppelt ist, und/oder
- die Halterung der Reinigungsvorrichtung (10) einen ersten Lagerbügel (23) und einen zweiten Lagerbügel (21) aufweist, zwischen denen der Reinigungskopf (1) drehbar gelagert ist, wobei der erste Lagerbügel (23) und der zweite Lagerbügel (21) bevorzugt durch einen Verbindungsabschnitt (22) verbunden sind.

15. Reinigungsvorrichtung (10) nach Anspruch 14,
**dadurch gekennzeichnet, dass**
- der Verbindungsabschnitt (22) parallel zu der Längsachse (L) des Reinigungskopfs (1) angeordnet ist und bevorzugt einen Hohlzylinder umfasst und/oder
- die Antriebsvorrichtung (3) zumindest teilweise in einem Aufnahmeabschnitt (22') des Verbindungsabschnitts (22) ortsfest aufgenommen ist.

16. Reinigungsvorrichtung (10) nach Anspruch 14 oder 15,
**dadurch gekennzeichnet, dass**
- der erste Lagerbügel (23) und/oder der zweite Lagerbügel (21) eine Aufnahmevorrichtung aufweist/aufweisen, in der der Aufnahmeabschnitt (133) des Steuerzylinders drehfest aufgenommen und bevorzugt verschraubt ist und/oder
- die Halterung der Reinigungsvorrichtung (10) ferner einen Griff (6) aufweist, der bevorzugt mit dem Verbindungsabschnitt (22) verbunden ist und/oder sich senkrecht von dem Verbindungsabschnitt (22) erstreckt, oder wobei ein Gehäuse des Antriebsmotors (3) den Griff (6) bildet.

17. Reinigungsvorrichtung (10) nach zumindest einem der Ansprüche 14 bis 16,
**dadurch gekennzeichnet, dass**
- der erste Lagerbügel (23) lösbar mit dem Verbindungsabschnitt (22) verbunden ist, bevorzugt verschraubt, und besonders bevorzugt eine Abdeckung für das Getriebe bildet und/oder
- der zweite Lagerbügel (21) eine Rückholvorrichtung (212) mit einer Steuergasse (213) aufweist, die im Wesentlichen parallel zu der Außenkontur des Steuerzylinders (13) verläuft, in der die freien Endabschnitte (124) der Reinigungselementebasen (122) geführt sind.

## Claims

1. A cleaning head (1) for hair and fur,
comprising a rotatable hollow cylindrical basic body (11), wherein a plurality of cleaning elements (12) which are displaceable as a function of a rotation angle of the basic body (11) extend away from said basic body (11),
wherein
- in the basic body (11), a control cylinder (13) is arranged eccentrically in relation to and parallel to a longitudinal axis (L) of the basic body in a stationary manner, and
- the cleaning elements (12) are arranged in comb-shaped groups,
wherein the respective cleaning elements (12) are connected along a common cleaning element base (122) running parallel to the longitudinal axis of the basic body (11) and extend away from a lateral area of the control cylinder (13) and are displaceably mounted in guides (111) included in the basic body (11).

2. The cleaning head (1) in accordance with Claim 1,
**characterised in that**
the cleaning elements (12) can be retracted into the basic body (11) as a function of the rotation angle of the basic body (11), with the result that they no longer or essentially no longer extend beyond the surface of the basic body (11).

3. The cleaning head (1) in accordance with Claim 1 or 2,
**characterised in that**
the control cylinder (13)
- has an elliptic or cam-shaped cross-section and/or
- is designed solid or as a hollow body with internal strut members (131).

4. The cleaning head (1) in accordance with at least any one of Claims 1 to 3,
**characterised in that**
at least at one of its ends, the control cylinder (13) forms itself beyond a longitudinally axial end of the basic body (11) and into a receiving section (133) being configured to be received in a storage device (2) in a non-rotatable manner.

5. The cleaning head (1) in accordance with at least any one of Claims 1 to 4,
**characterised in that**
the cleaning elements (12)
- are arranged parallel to the longitudinal axis in angularly offset rows.

6. The cleaning head (1) in accordance with at least any one of Claims 1 to 5,
**characterised in that**
a return device (135, 212) exerting a return force on the cleaning elements (12) is operatively connected to the cleaning elements (12).

7. The cleaning head (1) in accordance with Claim 6,
**characterised in that**
the return device (135, 212)
- comprises at least one elastomer ring which is slipped over the cleaning element bases (122), preferably at an end of the longitudinally axial end sections (124) of the cleaning element bases (122),
and/or
- comprises a forced control device which preferably has a ircumferential control lane (136, 213) that is more preferably present in at least one longitudinally axial end section of the control cylinder (13) and runs parallel to an outer contour of the control cylinder (13), wherein the longitudinally axial end sections of the cleaning element bases (122) are guided therein.

8. The cleaning head (1) in accordance with at least any one of Claims 1 to 7,
**characterised in that**
the cleaning elements (12) are preferably tapering in an end section projecting from the lateral area of the basic body (11), more preferably are bristles, tines or teeth, even more preferably are asymmetric teeth having a point form ascending in the direction of movement.

9. The cleaning head (1) in accordance with at least any one of Claims 1 to 8,
**characterised in that**
the basic body (11) is concentrically connected to a torque transfer device, preferably a driving toothed wheel, in a non-rotatable manner, wherein, more preferably, an inner lateral area of the driving toothed wheel (16) is mounted on a storage section (132) of the control cylinder (13) in a rotatable manner.

10. A cleaning device (10) for hair and fur, comprising a holding arm which is connected to a driven cleaning head,
**characterised in that**
the cleaning head is a cleaning head (1) in accordance with at least any one of Claims 1 to 9.

11. The cleaning device (10) in accordance with Claim 10,
**characterised in that**
a stationary stripping device (51) arranged parallel to the longitudinal axis of the cleaning head (1) is connected to the holding arm, wherein a stripping gap is present between a stripping edge of the stripping device (51) and the lateral area of the basic body (11) of the cleaning head (1).

12. The cleaning device (10) in accordance with Claim 10 or 11,
**characterised in that**
at an angular position of the stripping edge (51), the cleaning elements (12) of the cleaning head (1) extend from the lateral area of the basic body (11) into the stripping gap by no more than the magnitude of the stripping gap.

13. The cleaning device (10) in accordance with at least any one of Claims 10 to 12,
**characterised in that**
- in the direction of movement (U) of the cleaning head (1), a collecting device, preferably a collecting bag or a collecting container (5) having a rigid casing, more preferably a collecting device comprising the stripping device (51), is arranged on the cleaning head (1) at least in part behind the stripping device (51), is more preferably arranged on the storage device (2) in a replaceable manner, and/or
- an extraction collector having an extraction opening is present on the stripping device (51), wherein the extraction opening extends parallel to the stripping edge and preferably has an extraction port.

14. The cleaning device (10) in accordance with at least any one of Claims 10 to 13,
**characterised in that**
- the drive device (3) comprises a drive motor (3), preferably an electric motor, pneumatic motor or hydraulic motor, which is operatively coupled to the torque transfer device of the basic body (11) of the cleaning head (1), more preferably via a gear mechanism, most preferably via a spur gear unit, and is connected to the holder, and/or
- an energy storage, preferably an accumulator, is arranged on the drive device (3), said energy storage being operatively coupled to the drive device (3), and/or
- the holder of the cleaning device (10) has a first bearing bracket (23) and a second bearing bracket (21) between which the cleaning head (1) is mounted in a rotatable manner, wherein the first bearing bracket (23) and the second bearing bracket (21) are preferably connected via a connecting section (22).

15. The cleaning device (10) in accordance with Claim 14,
**characterised in that**
- the connecting section (22) is arranged parallel to the longitudinal axis (L) of the cleaning head (1) and preferably comprises a hollow cylinder,
and/or
- the drive device (3) is received, at least in part, in a receiving section (22') of the connecting section (22) in a stationary manner.

16. The cleaning device (10) in accordance with Claim 14 or 15,
**characterised in that**
- the first bearing bracket (23) and/or the second bearing bracket (21) have/has a receiving device in which the receiving section (133) of the control cylinder is received in a stationary manner and, preferably, screwed in, and/or
- the holder of the cleaning device (10) further has a handle (6) which is preferably connected to the connecting section (22) and/or vertically extends from the connecting section (22), or wherein a housing of the drive motor (3) forms the handle (6).

17. The cleaning device (10) in accordance with at least any one of Claims 14 to 16,
**characterised in that**
- the first bearing bracket (23) is detachably connected, preferably screwed, to the connecting section (22) and more preferably forms a cover for the gear mechanism, and/or
- the second bearing bracket (21) has a return device (212) with a control lane (213) which essentially runs parallel to the outer contour of the control cylinder (13), with the free end sections (124) of the cleaning element bases (122) being guided therein.

## Revendications

1. Tête de nettoyage (1) pour poils et fourrure,
avec un corps de base cylindrique creux rotatif (11) à l'écart duquel s'étend une pluralité d'éléments de nettoyage (12) qui peuvent être coulissés en fonction d'un angle de rotation du corps de base (11), dans laquelle
- un cylindre de commande (13) est disposé de manière fixe dans le corps de base (11) de manière excentrique par rapport à et parallèlement à un axe longitudinal (L) du corps de base et
- les éléments de nettoyage (12) sont disposés en groupes en forme de peigne, dans laquelle les éléments de nettoyage respectifs (12) sont connectés le long d'une base d'élément de nettoyage commune (122) qui s'étend parallèlement à l'axe longitudinal du corps de base (11) et s'étendent à l'écart d'une face d'enveloppe du cylindre de commande (13), et sont logés de manière à pouvoir être coulissés dans des guides (111) que présente le corps de base (11).

2. Tête de nettoyage (1) selon la revendication 1,
**caractérisée en ce que**
les éléments de nettoyage (12) peuvent être abaissés jusque dans le corps de base (11) en fonction de l'angle de rotation du corps de base (11) de sorte qu'ils ne s'étendent plus ou essentiellement plus au-delà de la surface du corps de base (11).

3. Tête de nettoyage (1) selon la revendication 1 ou 2,
**caractérisée en ce que**
le cylindre de commande (13)
- présente une section transversale elliptique ou en forme de came et/ou
- est réalisé de manière massive ou en tant que corps creux avec un entretoisement interne (131).

4. Tête de nettoyage (1) selon au moins une des revendications 1 à 3,
**caractérisée en ce que**
le cylindre de commande (13) se forme au moins à une extrémité au-delà d'une extrémité axiale longitudinale du corps de base (11) et dans une section de réception (133) qui est réalisée pour la réception fixe en rotation dans un dispositif de stockage (2).

5. Tête de nettoyage (1) selon au moins une des revendications 1 à 4,
**caractérisée en ce que**
les éléments de nettoyage (12)
- sont disposés en rangées décalées de manière angulaire parallèlement à l'axe longitudinal.

6. Tête de nettoyage (1) selon au moins une des revendications 1 à 5,
**caractérisée en ce que**
un dispositif de rappel (135, 212) qui exerce une force de rappel sur les éléments de nettoyage (12) est connecté de manière opérationnelle aux éléments de nettoyage (12).

7. Tête de nettoyage (1) selon la revendication 6,
**caractérisée en ce que**
le dispositif de rappel (135, 212)
- comprend au moins un anneau élastomère qui est strié au-dessus des éléments de nettoyage (122), de préférence à une extrémité des sections d'extrémité axiales longitudinales (124) des bases d'élément de nettoyage (122) et/ou
- comprend un dispositif de commande forcée qui présente de préférence un canal de commande périphérique (136, 213) qui est de manière particulièrement préférée présent dans au moins une section d'extrémité axiale longitudinale du cylindre de commande (13) et qui s'étend parallèlement à un contour externe du cylindre de commande (13), dans laquelle les sections d'extrémité axiales longitudinales des bases d'élément de nettoyage (122) sont guidées dans celui-ci.

8. Tête de nettoyage (1) selon au moins une des revendications 1 à 7,
**caractérisée en ce que**
les éléments de nettoyage (12) se rétrécissent de préférence dans une section d'extrémité saillant de la face d'enveloppe du corps de base (11), sont de manière particulièrement préférée des brosses, pointes ou dents, de manière encore plus fortement préférée des dents asymétriques avec une forme de pointe montante dans le sens de mouvement.

9. Tête de nettoyage (1) selon au moins une des revendications 1 à 8,
**caractérisée en ce que**
le corps de base (11) est connecté de manière fixe en rotation et concentrique à un transmetteur de couple de rotation, de préférence une roue dentée d'entraînement (16), dans laquelle une face d'enveloppe interne de la roue dentée d'entraînement (16) est de manière particulièrement préférée logée à rotation sur une section de stockage (132) du cylindre de commande (13).

10. Dispositif de nettoyage (10) pour poils et fourrure avec un bras de support qui est connecté à une tête de nettoyage entraînée,
**caractérisé en ce que**
la tête de nettoyage est une tête de nettoyage (1) selon au moins une des revendications 1 à 9.

11. Dispositif de nettoyage (10) selon la revendication 10,
**caractérisé en ce que**
un dispositif de raclage fixe (51) qui est disposé parallèlement à l'axe longitudinal de la tête de nettoyage (1) est connecté au bras de support, dans lequel un interstice de raclage est présent entre une arête de raclage du dispositif de raclage (51) et la face d'enveloppe du corps de base (11) de la tête de nettoyage (1).

12. Dispositif de nettoyage (10) selon la revendication 10 ou 11,
**caractérisé en ce que**
les éléments de nettoyage (12) de la tête de nettoyage (1) s'étendent dans l'interstice de raclage à une position angulaire de l'arête de raclage (51) au maximum de la valeur de l'interstice de raclage depuis la face d'enveloppe du corps de base (11).

13. Dispositif de nettoyage (10) selon au moins une des revendications 10 à 12,
**caractérisé en ce que**
- un dispositif collecteur, de préférence un sac collecteur ou récipient collecteur (5) avec une enveloppe rigide, de manière particulièrement préférée un dispositif collecteur comprenant le dispositif de raclage (51), est disposé sur la tête de nettoyage (1) dans le sens de mouvement (U) de la tête de nettoyage (1) au moins partiellement derrière le dispositif de raclage (51), de manière particulièrement préférée disposé de manière interchangeable sur le dispositif de stockage (2) et/ou
- un collecteur d'aspiration avec une ouverture d'aspiration est présent sur le dispositif de raclage (51), dans lequel l'ouverture d'aspiration s'étend parallèlement à l'arête de raclage et présente de préférence un port d'aspiration.

14. Dispositif de nettoyage (10) selon au moins une des revendications 10 à 13,
**caractérisé en ce que**
- le dispositif d'entraînement (3) comprend un moteur d'entraînement (3), de préférence un moteur électrique, moteur pneumatique ou moteur hydraulique, qui est couplé de manière particulièrement préférée par le biais d'un engrenage, de manière préférée entre toutes par le biais d'un réducteur à engrenage droit, de manière opérationnelle au transmetteur de couple de rotation du corps de base (11) de la tête de nettoyage (1) et est connecté au dispositif de fixation et/ou
- un réservoir d'énergie, de préférence un accumulateur, est disposé sur le dispositif d'entraînement (3), lequel est couplé de manière opérationnelle au dispositif d'entraînement (3), et/ou
- le dispositif de fixation du dispositif de nettoyage (10) présente une première console terminale (23) et une seconde console terminale (21) entre lesquelles la tête de nettoyage (1) est logée à rotation, dans lequel la première console terminale (23) et la seconde console terminale (21) sont de préférence connectées par une section de connexion (22).

15. Dispositif de nettoyage (10) selon la revendication 14,
**caractérisé en ce que**
- la section de connexion (22) est disposée parallèlement à l'axe longitudinal (L) de la tête de nettoyage (1) et comprend de préférence un cylindre creux et/ou
- le dispositif d'entraînement (3) est reçu de manière fixe au moins partiellement dans une section de réception (22') de la section de connexion (22).

16. Dispositif de nettoyage (10) selon la revendication 14 ou 15,
**caractérisé en ce que**
- la première console terminale (23) et/ou la seconde console terminale (21) présente(nt) un dispositif de réception dans lequel la section de réception (133) du cylindre de commande est reçue de manière fixe en rotation et de préférence vissée et/ou
- le dispositif de fixation du dispositif de nettoyage (10) présente en outre une poignée (6) qui est de préférence connectée à la section de connexion (22) et/ou s'étend perpendiculairement à la section de connexion (22), ou dans lequel un logement du moteur d'entraînement (3) forme la poignée (6).

17. Dispositif de nettoyage (10) selon au moins une des revendications 14 à 16,
**caractérisé en ce que**
- la première console terminale (23) est connectée de manière amovible à la section de connexion (22), de préférence vissée, et forme de manière particulièrement préférée un recouvrement pour l'engrenage et/ou
- la seconde console terminale (21) présente un dispositif de rappel (212) avec un canal de commande (213) qui s'étend essentiellement parallèlement au contour externe du cylindre de commande (13), dans lequel les sections d'extrémité libres (124) des bases d'élément de nettoyage (122) sont guidées.
